Europäisches Patentamt

European Patent Office

Office européen des brevets

(19)

(11) Numéro de publication : **0 474 525 A1**

## (12) DEMANDE DE BREVET EUROPEEN

(21) Numéro de dépôt : **91402154.8**

(22) Date de dépôt : **31.07.91**

(51) Int. Cl.$^5$ : **B32B 27/18,** B65D 65/40

(30) Priorité : **08.08.90 FR 9010135**

(43) Date de publication de la demande :
**11.03.92 Bulletin 92/11**

(84) Etats contractants désignés :
**AT BE CH DE DK ES GB GR IT LI LU NL SE**

(71) Demandeur : **LES IMPRESSIONS EN CONTINU**
**163 à 183 rue Benoît Frachon, Z.I. du Prunay**
**F-78500 Sartrouville (FR)**

(72) Inventeur : **Mengard, Michel**
**4, rue Sainte Cécile**
**F-17139 Dompierre sur Seine (FR)**

(74) Mandataire : **Polus, Camille et al**
**c/o Cabinet Lavoix 2, Place d'Estienne d'Orves**
**F-75441 Paris Cedex 09 (FR)**

(54) **Film multicouches pour conditionnement de produits.**

(57)   L'invention est relative à un film multicouches (2) destiné au conditionnement de produits, comportant au moins une couche interne (4) en matière plastique perméable à l'air et au moins une couche (6) formant barrière à l'air, la couche interne étant fixée sur la couche qui lui est contiguë à l'aide d'une composition formant colle (8) contenant un absorbant d'oxygène.

FIG.1

La présente invention concerne un film multicouches en matières plastiques destiné au conditionnement de produits, notamment de produits alimentaires.

Il est courant d'utiliser un film en matière plastique pour conditionner ou emballer des produits alimentaires.

Un tel film lorsqu'il est monocouche et doit constituer une barrière à l'air, c'est-à-dire qu'il est difficilement traversé par l'air, doit être enduit par exemple d'une émulsion permettant de souder thermiquement le film sur lui-même ou sur un autre support.

Dans un tel cas, on constate que la soudure présente une étanchéité à l'air insuffisante et permet l'introduction d'air, donc d'oxygène, dans l'emballage.

Cet inconvénient se traduit par une durée de conservation limitée du produit contenu dans l'emballage, en particulier s'il s'agit d'un produit alimentaire.

Pour remédier à cet inconvénient, il a donc été conçu des films comportant deux couches superposées par collage à l'aide d'une résine et possédant une couche thermosoudable et une couche barrière pour associer les qualités de ces deux couches.

Malgré l'amélioration ainsi apportée, la conservation des produits alimentaires est limitée dans le temps par la présence d'oxygène dans l'emballage.

Certains procédés consistant à évacuer l'oxygène de l'emballage par mise sous vide ou par injection d'un gaz inerte tel que l'azote ont permis d'améliorer la conservation, mais il s'avère que ces procédés sont coûteux et ne peuvent s'adapter à tous les produits alimentaires.

De plus lorsqu'on effectue un balayage à l'aide d'azote par exemple, une certaine quantité d'oxygène (de 0,5 à 2%) reste dans l'emballage, ce qui peut être suffisant dans certains cas pour limiter la durée de conservation du produit.

Il a également été réalisé des films multicouches dont une couche est réalisée à l'aide d'une matière plastique à laquelle a été ajouté un absorbant de l'oxygène lors de sa fabrication. Un tel film s'avère coûteux, l'adjonction de l'absorbant d'oxygène étant particulièrement délicate à mettre en oeuvre. De plus ces films comportent en général au moins trois couches, ce qui accroît de manière importante leur prix de revient.

Pour remédier à ces inconvénients, l'invention a pour but de fournir un film multicouches permettant de diminuer la teneur en oxygène de l'emballage, étant thermosoudable et formant barrière à l'air, et d'un prix de revient acceptable.

A cet effet l'invention a pour objet un film multicouches destiné au conditionnement d'un produit, comportant au moins une couche interne possédant une face interne destinée à être en vis-à-vis du produit et une face externe, et au moins une couche formant barrière à l'air, caractérisé en ce que la couche interne est constituée d'une matière plastique perméable aux gaz et en ce que la face externe de la couche interne est fixée sur la couche contigue à l'aide d'une composition formant colle et contenant un absorbant d'oxygène.

Selon d'autres caractéristiques :
– la composition est appliquée sur une partie de la face externe de la couche interne ;
– la composition est appliquée sur toute la face externe de la couche interne ;
– l'absorbant d'oxygène est constitué par du fer ;
– l'absorbant d'oxygène est constitué par un mélange à base de fer ;
– le mélange à base de fer comporte au moins 60% de fer ;
– la composition formant colle, étalée sur la face externe de la couche interne, comporte entre 0,5 et 30 g/m² de particules de fer réduit pur d'une dimension comprise entre 5 et 30 μ ;
– la composition comporte une résine à un seul composant ;
– la composition comporte une résine à deux composants ;
– la couche formant barrière constitue ladite couche contiguë.

L'invention sera mieux comprise à la lecture de la description détaillée qui va suivre faite à titre d'exemple en référence aux dessins annexés sur lesquels :
– La figure 1 représente en perspective un film multi-couches selon l'invention ;
– la figure 2 représente l'évolution dans le temps du pourcentage d'oxygène contenu dans un sachet réalisé à l'aide d'un film selon l'invention et dans un sachet réalisé avec un film à deux couches selon la technique antérieure.

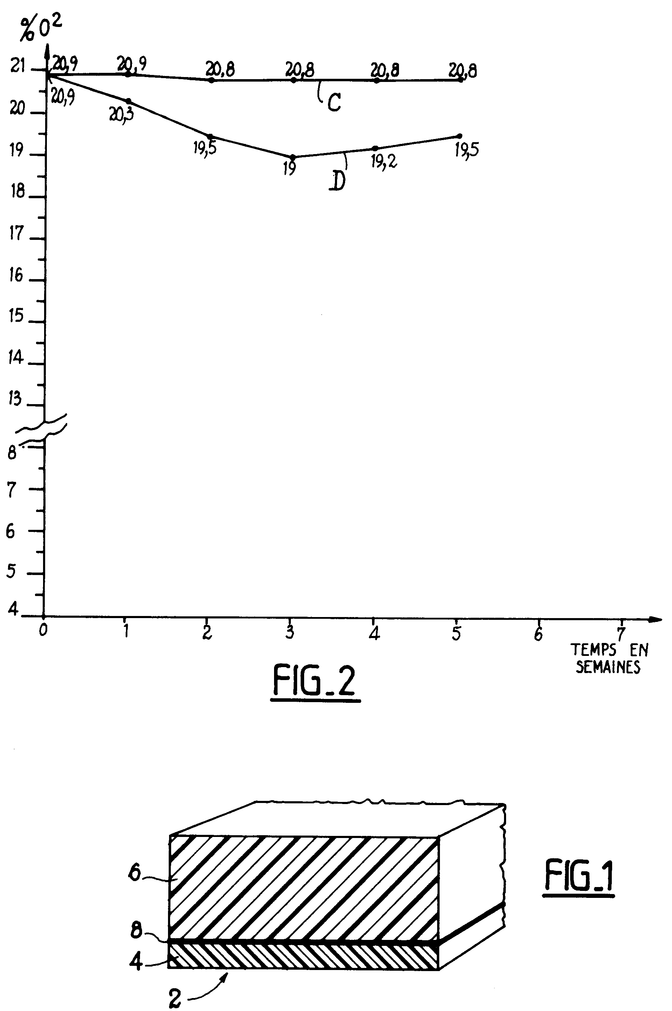

Sur la figure 1 on a représenté un film 2 selon l'invention comportant une couche interne 4 et une couche externe 6 superposées et liées entre elles à l'aide d'une composition formant colle 8.

La couche interne 4 est constituée d'une feuille de polyéthylène d'une épaisseur de 50 microns qui est perméable à l'oxygène et thermosoudable.

La couche externe 6 est constituée d'une feuille de polyéthylène téréphtalate d'une épaisseur de 12 microns qui constitue une barrière à l'air.

La composition formant colle est constituée de résine avec ou sans solvant et de fer réduit (obtenu par réduction) très pur se présentant sous forme de granules de dimension comprise entre 5 et 30 microns, constituant un absorbant d'oxygène.

En variante la composition formant colle peut être composée d'une résine et d'un mélange à base de fer et d'adjuvant.

Dans une telle composition le mélange comporte avantageusement au moins 60% de fer sous forme de granules de dimension comprise entre 5 et 30 microns.

De tels films peuvent être aisément réalisés à l'aide de machines connues et destinées à réaliser des films ayant deux couches selon la technique antérieure dans lesquelles on introduit la composition en lieu et place de la résine utilisée dans la technique antérieure. Un film selon l'invention peut être utilisé pour former par thermosoudage des sachets destinés à contenir un produit ou des couvercles étanches de récipients ouverts, par thermosoudage sur les bords de ce dernier.

L'utilisation d'un film selon l'invention permet d'associer les qualités requises de thermosoudabilité, de barrière à l'air et d'absorption de l'oxygène contenue dans le conditionnement.

On a réalisé des tests à l'aide de plusieurs films selon l'invention dans lesquels on a fait varier la composition des couches de matières plastiques et la teneur en fer de la composition formant colle. Les résultats obtenus ont été comparés à ceux obtenus à l'aide de films comportant une couche perméable et une couche barrière selon la technique antérieure.

Ces tests ont consisté à mettre dans des sachets clos par thermosoudage un produit alimentaire déterminé et à mesurer la teneur en oxygène du sachet en fonction du temps.

Les résultats ont permis de tracer deux courbes comparatives qui sont représentées sur la figure 2.

Sur la figure 2 on a reporté en abscisse le temps en prenant pour unité la semaine et en ordonnée la teneur en oxygène.

La courbe C représente l'évolution de la teneur en oxygène dans un sachet réalisé à l'aide d'un film selon la technique antérieure, composé d'une couche interne de polyéthylène ayant une épaisseur de 50 microns et d'une couche externe en polyéthylène téréphtalate avant une épaisseur de 12 microns, superposées et liées l'une à l'autre à l'aide d'une résine.

On constate qu'au fil des semaines la teneur en oxygène représentée par la courbe C reste pratiquement égale à la valeur de départ c'est-à-dire 20,9%.

Par contre avec le film de la figure 1 dans lequel la composition étalée sur la couche interne contient 4 grammes de fer par $m^2$ de composition étalée, il apparaît sur la courbe D de la figure 2 que la teneur en oxygène décroît à 20,3% après une semaine, 19,5% après deux semaines, 19,0% après trois semaines, puis remonte à 19,2% après quatre semaines et 19,5% après cinq semaines.

La remontée de la teneur en oxygène qui apparaît après trois semaines est due au fait que la barrière constituée par le polyéthylène téréphtalate n'est pas entièrement étanche à l'air. En conséquence, lorsque le fer est saturé d'oxygène, l'air pénétrant dans le sachet fait croître le pourcentage d'oxygène car il n'est plus absorbé.

Il est possible en augmentant la quantité de fer dans la composition de retarder cette remontée. De même en utilisant une couche barrière plus efficace, la remontée peut être retardée.

Lors de ces essais il a été également constaté qu'en utilisant dans un film selon l'invention une couche barrière composée de polyéthylène terephtalate métallisé d'une épaisseur de 12 microns, on obtient des résultats semblables à ceux de la courbe D avec uniquement 1,2 $g/m^2$ de fer dans la composition étalée.

Ces différents tests ont permis également de constater que selon la structure et l'épaisseur des couches, la composition étalée pour obtenir des résultats semblables à la courbe D doit contenir entre 0,5 g et 30 $g/m^2$ de fer.

En faisant varier les valeurs telles que l'épaisseur ou la composition de la couche barrière, la quantité de fer ou le mélange à base de fer etc, il est possible de réduire très rapidement ,jusqu'à une valeur désirée la teneur en oxygène d'un emballage fermé a l'aide d'un film selon l'invention.

La teneur en oxygène peut être réduite à 0,5% s'il n'y a pas eu balayage à l'aide d'un gaz inerte et à 0,1 % dans le cas où un balayage à l'azote a été effectué.

Il a été constaté que la durée de conservation des produits alimentaires croît lorsque la teneur en oxygène du sachet diminue, c'est-à-dire qu'il existe un lien direct entre l'utilisation d'un film selon l'invention et l'augmentation de la durée de conservation.

## Revendications

1. Film multicouches (2) destiné au conditionnement de produits, comportant au moins une couche interne (4) possédant une face interne destinée à être en vis-à-vis du produit et une face externe, et au moins une couche formant barrière à l'air (6), caractérisé en ce que la couche interne est constituée d'une matière plastique perméable aux gaz et en ce que la face externe de la couche interne est fixée sur la couche qui lui est contiguë à l'aide d'une composition formant colle (8) et contenant un absorbant d'oxygène.

2. Film multicouches selon la revendication 1, caractérisé en ce que la composition (8) est appliquée sur une partie de la face externe de la couche interne.

3. Film multicouches selon la revendication 1, caractérisé en ce que la composition (8) est appliquée sur toute la face externe de la couche interne.

4. Film multicouches selon l'une quelconque des revendications précédentes, caractérisé en ce que l'absorbant d'oxygène est constitué par du fer.

5. Film multicouches selon l'une quelconque des revendications 1 à 3, caractérisé en ce que l'absorbant d'oxygène est constitué d'un mélange à base de fer.

6. Film multicouches selon la revendication 5, caractérisé en ce que le mélange à base de fer comporte au moins 60% de fer.

7. Film multicouches selon l'une quelconque des revendications 4 à 6, caractérisé en ce que l'absorbant d'oxygène est constitué par du fer réduit très pur sous forme de particules de 5 à 30 microns.

8. Film multicouches selon la revendication 7, caractérisé en ce que la composition formant colle étalée (8) sur au moins une partie de la face externe de la couche interne comporte entre 0,5 et 30 g/m$^2$ de fer pur réduit.

9. Film multicouches selon l'une quelconque des revendications précédentes, caractérisé en ce que la composition (8) comporte une résine à base d'un mono-composant.

10. Film multicouches selon l'une quelconque des revendications précédentes, caractérisé en ce que la composition (8) comporte une résine à des composants.

11. Film multicouches selon l'une quelconque des revendications précédentes, caractérisé en ce que la couche formant barrière constitue ladite couche contiguë.

FIG.2

FIG.1

Office européen
des brevets

**RAPPORT DE RECHERCHE EUROPEENNE**

Numero de la demande

EP    91 40 2154

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 536 409 (C.J.FARRELL ET AL.)<br>* colonne 4, ligne 13 - colonne 4, ligne 62 *<br>* colonne 6, ligne 6 - colonne 6, ligne 26;<br>revendications 1-4 *<br>--- | 1-3,11 | B32B27/18<br>B65D65/40 |
| P,X | JAPANESE PATENTS REPORTS<br>7 Décembre 1990<br>Derwent Publications Ltd., London, GB;<br>& JP-2 235 621 (MITSUBISHI MONSANTO CHEM CO) 18 Septembre 1990<br>* abrégé *<br>--- | 1-3,11 | |
| A | US-A-4 485 133 (S. OHTSUKA ET AL.)<br>* colonne 2, ligne 55 - colonne 2, ligne 60;<br>exemple 1 *<br>----- | 4-7 | |

**DOMAINES TECHNIQUES RECHERCHES (Int. Cl.5)**

B32B

Le présent rapport a été établi pour toutes les revendications

| Lieu de la recherche | Date d'achèvement de la recherche | Examinateur |
|---|---|---|
| LA HAYE | 06 DECEMBRE 1991 | DERZ T. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant